# EUROPEAN PATENT SPECIFICATION

(11) **EP 4 254 923 B1**
(45) Date of publication and mention of the grant of the patent: **01.07.2026**
(21) Application number: 21898200.7
(22) Date of filing: 30.11.2021
(51) Int. Cl.: H04N 1/00, G06F 3/0488, G06F 3/0482, G06F 3/04847

(54) **INFORMATION PROCESSING APPARATUS AND INFORMATION PROCESSING PROGRAM**
INFORMATIONSVERARBEITUNGSVORRICHTUNG UND INFORMATIONSVERARBEITUNGSPROGRAMM
APPAREIL DE TRAITEMENT D'INFORMATIONS ET PROGRAMME DE TRAITEMENT D'INFORMATIONS

(30) Priority: 30.11.2020 JP 2020199169
(43) Date of publication of application: 04.10.2023
(73) Proprietor: FUJIFILM Corporation, Tokyo 106-8620 (JP)
(72) Inventor: ISHIBASHI, Yuko, Yokohama-shi, Kanagawa 220-0012 (JP)
(74) Representative: Meissner Bolte Partnerschaft mbB
(86) International application number: PCT/JP2021/043933
(87) International publication number: WO 2022/114229

(56) References cited:
- JP-A- 2015 073 150
- JP-A- 2016 045 762
- JP-A- 2019 135 814
- US-A1- 2019 245 989
- US-A1- 2019 384 552

## Description

### Technical Field

The technology of the present disclosure relates to an information processing apparatus and an information processing program.

### Background Art

Japanese Patent Application Laid-Open (JP-A) No. 2020-123235 discloses an image processing apparatus including a display unit that displays a setting screen in which any one of a combination including a plurality of first initial values that are initial values at factory shipment and a combination including a plurality of second initial values set by a user as a default is set, the setting values being able to be changed on the setting screen are changed before executing a processing unit using one of a plurality of functions of the image processing apparatus. The image processing apparatus includes a management unit that executes one of the functions in advance and manages setting content of an executed job. The display unit displays a setting history button for executing the processing unit again based on information managed by the management unit. A difference between the first initial value and the set value and a difference between the second initial value and the set value are displayed on the setting history button.

Japanese Patent Application Laid-Open (JP-A) No. 2019-176252 A discloses an information processing apparatus that displays a setting screen for setting a plurality of setting values used for a function selected by a user in a state where initial values registered in factory shipment are set. The information processing apparatus includes: a control unit that controls execution of the function using the setting values set on the setting screen; a display control unit that performs display control of a setting history button for calling the setting values used in the function according to the execution of the function; a reference switching unit that switches a specific reference for specifying a setting value different from the initial value of the setting screen among the plurality of setting values used in the function; a generation unit that generates setting value information indicating the setting value specified based on the specific reference; and a change instruction reception unit that receives an instruction to change an initial value of the setting screen to another initial value other than the initial value registered in factory shipment. The display control unit displays the set value information for the setting history button. In a case in which the initial value of the setting screen is changed to anther initial value, the reference switching unit switches the specific reference to anther initial value

US 2019/245989 discloses an image forming apparatus with a setting screen that displays a history of reusable setting items for executing a image processing function.

### SUMMARY OF INVENTION

### Technical Problem

For example, setting information preset by the user to define an operation of a specific function is displayed in association with an operator executing a specific function, such as a button displayed on a touch panel, and the user is notified details of the function executed by operating the operator in some cases.

However, as the number of setting items to be set in the setting information increases, the number of pieces of setting information displayed in association with the operator also increases, and a time required for the user to confirm the setting information increases. Furthermore, since some setting items may have any setting information set for the user, setting information that does not need to be confirmed by the user is also displayed.

An object of the technology of the present disclosure is to provide an information processing apparatus and an information processing program capable of reducing the number of pieces of setting information to be confirmed in a case in which a user selects an operator to be operated is selected as compared with a case in which all the set setting information is displayed in association with the operator that executes a function in accordance with setting information.

### Solution to Problem

According to a first aspect, an information processing apparatus includes a processor, in which the processor displays a first operator for allowing a user to select a function to be executed on a display device, and displays a setting screen for receiving setting information for each setting item for setting an operation of a function associated with the first operator selected by the user on the display device. The processor does not display the setting information of which a value is set automatically in association with a second operator in a case in which the second operator for executing the function associated with the first operator is displayed on the display device in accordance with the setting information set through the setting screen.

An information processing apparatus according to a second aspect may be the information processing apparatus according to the first aspect, in which the processor does not display the setting information of which a default setting value is automatically set among the pieces of setting information of which the value is set automatically on the display device in association with the second operator.

An information processing apparatus according to a third aspect may be the information processing apparatus according to the first aspect, in which the processor does not display the setting information of which the value is set automatically on the display device in association with the second operator, regardless of whether or not a default setting value of the setting information is automatic.

An information processing apparatus according to a fourth aspect is the information processing apparatus according to the second or third aspect, in which the processor displays the setting information of the setting item designated in advance by the user on the display device in association with the second operator, even if the setting information satisfies a condition that display is not executed in association with the second operator.

An information processing apparatus according to a fifth aspect may be the information processing apparatus according to any one of the first to fourth aspects, in which at least one of a history operator generated when an instruction to execute the function associated with the first operator is received from the user in the setting information and a save operator generated as the setting information repeatedly used by the user is included as the second operator.

An information processing apparatus according to a sixth aspect may be the information processing apparatus according to the fifth aspect, in which the processor includes and displays at least one of the pieces of setting information of which the value is set to a value which is not automatic in the history operator.

An information processing apparatus according to a seventh aspect may be the information processing apparatus according to the sixth aspect, in which the processor controls the number of pieces of the setting information to be displayed on the display device such that the number of pieces of the setting information to be displayed in association with the save operator is smaller than the number of pieces of the setting information to be displayed in association with the history operator.

An information processing apparatus according to an eighth aspect may be the information processing apparatus according to the seventh aspect, in which the processor does not display the setting information on the display device in association with the save operator.

An information processing apparatus according to a ninth aspect is the information processing apparatus according to the seventh or eighth aspect, in which the processor displays the history operator and the save operator on the same screen.

An information processing apparatus according to a tenth aspect is the information processing apparatus according to the ninth aspect, in which the processor displays the history operator and the save operator in parallel and displays the history operator and the save operator such that the history operator and the save operator are scrolled simultaneously.

An information processing program according to an eleventh aspect may be a program causing a computer to execute: displaying a first operator for allowing a user to select a function to be executed on a display device, and displaying a setting screen for receiving setting information for each setting item for setting an operation of a function associated with the first operator selected by the user on the display device; and not displaying the setting information of which a value is set automatically in association with a second operator in a case in which the second operator for executing the function associated with the first operator is displayed on the display device in accordance with the setting information set through the setting screen.

### Advantageous Effects of Invention

According to the first and eleventh aspects, there is an advantageous effect that it is possible to inhibit the number of pieces of setting information to be confirmed in a case in which an operator operated by a user is selected as compared with a case in which all the set setting information is displayed in association with the operator that executes a function in accordance with setting information.

According to the second aspect, there is an advantageous effect that displaying of the setting information that the user is not required to confirm in association with the second operator can be suppressed.

According to the third aspect, there is an advantageous effect that displaying of the setting information regarding the setting item for which any value may be set for the user can be suppressed in association with the second operator.

According to the fourth aspect, there is an advantageous effect that the user can select setting information which is not required to be displayed in association with the second operator.

According to the fifth aspect, there is an advantageous effect that it is possible to adjust the number of pieces of setting information displayed in association with at least one of the history operator and the save operator.

According to the sixth aspect, there is an advantageous effect that it is possible to display setting information that is better for the user to confirm in association with the history operator in a case in which the history operator is operated.

According to the seventh aspect, there is an advantageous effect that the displaying of the setting information displayed in association with the save operator can be simplified compared with displaying of the setting information displayed in association with the history operator.

According to the eighth aspect, there is an advantageous effect that unnecessary display can be inhibited by the user.

According to the ninth aspect, there is an advantageous effect that even in a case in which the history operator and the save operator are displayed in a mixed manner on the same screen, it is possible to determine whether an operator is the history operator or the save operator based on a display form of the pieces of setting information displayed in association with each other.

According to the tenth aspect, there is an advantageous effect that it is not required to select which operator is able to be scrolled individually between the history operator and the save operator.

### BRIEF DESCRIPTION OF DRAWINGS

Fig. 1 is a diagram illustrating a configuration example of main units of an information processing apparatus.
Fig. 2 is a diagram illustrating an example of a menu screen.
Fig. 3 is a diagram illustrating an example of a setting screen.
Fig. 4 is a diagram illustrating an example of a history screen.
Fig. 5 is a flowchart illustrating an example of a display process.
Fig. 6 is a view illustrating a display example of setting information in a history button displayed on a display unit with a screen size of 10 inches.
Fig. 7 is a diagram illustrating a display example of setting information in a history button displayed on a display unit with a screen size of 5 inches.
Fig. 8 is a flowchart illustrating a modified example of a display process.

### DESCRIPTION OF EMBODIMENTS

Hereinafter, the present embodiment will be described with reference to the drawings. The same components and the same processes are denoted by the same reference numerals throughout the drawings, and repeated description will be omitted.

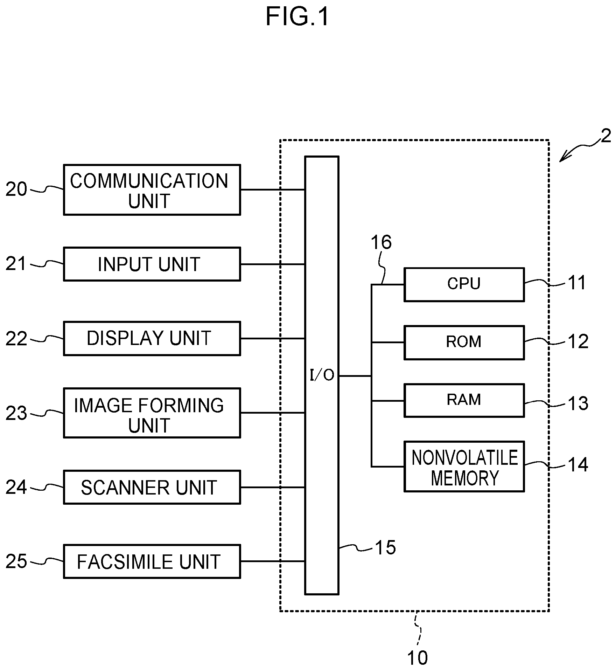

Fig. 1 is a diagram illustrating a configuration example of main units of an information processing apparatus. The information processing apparatus according to the embodiment is an apparatus that executes a selected function in accordance with setting information set for each setting item by the user. There is no restriction on a type of information processing apparatus as long as the information processing apparatus is an apparatus that displays an operator that receives an operation from the user and starts executing the function on the screen, and any type of information processing apparatus may be used.

Here, the "setting item" is an attribute for defining an operation of the function, and the "setting information" is a value set for the setting item. There are no restrictions on an expression form of the setting information. For example, numerical values, characters, symbols, figures, and images can be used. The "operator" is a user interface that is an operation target of a user and receives an operation of the user.

Hereinafter, as an example of an information processing apparatus, an embodiment of an information processing apparatus will be described using an image forming apparatus 2 that has at least one of a plurality of functions such as an image forming function of forming content of a designated file on a recording medium, a scanner function of optically reading content described on a document, a copy function of forming content of a read document on a recording medium as an image, and a facsimile function of transmitting and receiving image data via a public line and forming received image data on a recording medium as an image. However, the information processing apparatus may be an information apparatus such as a smartphone, a tablet terminal, a wearable device, or a desktop computer.

The image forming apparatus 2 is configured using, for example, a computer 10. The computer 10 includes a central processing unit (CPU) 11 that is an example of a processor responsible for executing functions, a read only memory (ROM) 12 that stores an information processing program causing the computer 10 to function as the image forming apparatus 2, a random access memory (RAM) 13 used as a temporary work area of the CPU 11, a nonvolatile memory 14, and an input/output interface (I/O) 15. The CPU 11, the ROM 12, the RAM 13, the nonvolatile memory 14, and the I/O 15 are connected via a bus 16.

The nonvolatile memory 14 is an example of a storage device in which stored information is retained even when power supplied to the nonvolatile memory 14 is cut off. For example, a semiconductor memory is used or a hard disk may be used. Information that is required to be continuously stored even when the power of the image forming apparatus 2 is cut off, such as history information of executed functions and setting information in executed functions, is stored in the nonvolatile memory 14.

The nonvolatile memory 14 is not necessarily built into the computer 10, and may be, for example, a portable storage device detachably mounted on the computer 10.

For example, a communication unit 20, an input unit 21, a display unit 22, an image forming unit 23, a scanner unit 24, and a facsimile unit 25 are connected to the I/O 15.

The communication unit 20 is connected to a communication line (not illustrated), and includes a communication protocol for transmitting and receiving data to and from an external device connected to the communication line (not illustrated).

The input unit 21 is a device that receives an instruction from a user and notifies the CPU 11, and includes, for example, a button, a touch panel, a mouse, a keyboard, and a pointing device. The image forming apparatus 2 includes at least a touch panel as an input unit.

The display unit 22 is a display device that displays information processed by the CPU 11 as an image and includes, for example, a liquid crystal display or an organic electro luminescence (EL) display. A touch panel which is an example of the input unit 21 is attached to the display unit 22 in a superimposed manner. When the user operates an operator displayed at a place where the touch panel is pressed, the CPU 11 is notified an instruction associated with the operated operator.

The image forming unit 23 is a unit that forms the received image on a recording medium in response to an instruction from the CPU 11. An image forming method in the image forming unit 23 may be any method. For example, any of an electrophotographic method, an inkjet method, and an offset printing method needs to be used. The image forming unit 23 is used in association with execution of an image forming function, a copy function, and a facsimile function.

The scanner unit 24 is a unit that optically reads, for example, content of a document placed on a platen glass (not illustrated) according to an instruction of the CPU 11 and converts the read content of the document into image data. The scanner unit 24 is used in accordance with execution of a scanner function, a copy function, and a facsimile function.

The facsimile unit 25 is, for example, a unit that transmits image data obtained by the scanner unit 24 to another facsimile device via a public line (not illustrated) and receives image data from another facsimile device via a public line (not illustrated). The CPU 11 causes the image forming unit 23 to form image data received from a public line (not illustrated) on a recording medium as an image. In accordance with convention, facsimile is also referred to as "fax".

The copy function is implemented by causing the CPU 11 to form the image data obtained by the scanner unit 24 on the recording medium by the image forming unit 23.

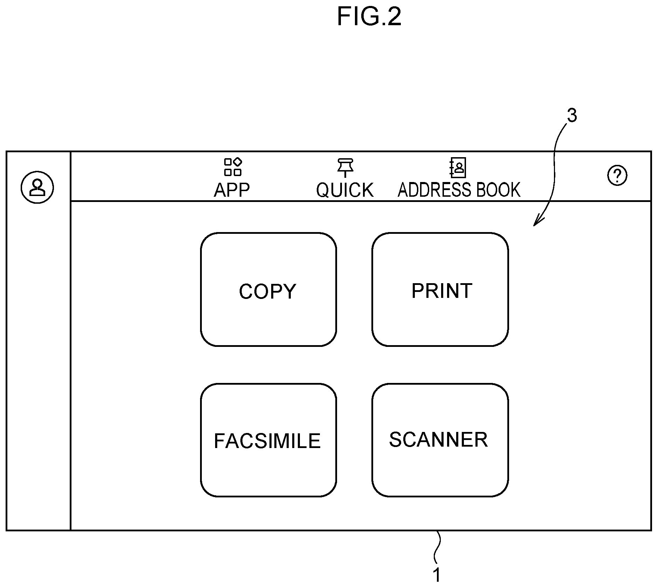

Fig. 2 is a diagram illustrating an example of a menu screen 1 displayed on the display unit 22 of the image forming apparatus 2.

A menu button 3 which is an example of a first operator for allowing the user to select a function to be executed is displayed on the menu screen 1. The menu button 3 includes a copy button for executing a copy function, a print button for executing an image forming function, a facsimile button for executing a facsimile function, and a scanner button for executing a scanner function.

When the user presses the menu button 3 corresponding to any function, the setting screen 4 of the function associated with the pressed menu button 3 is displayed on the display unit 22. When the power of the image forming apparatus 2 is turned on, the menu screen 1 may be displayed as an initial screen, or a history screen 6 to be described below may be displayed as an initial screen. In the latter case, for example, when history information to be described below is stored in the nonvolatile memory 14, the history screen 6 may be displayed as the initial screen.

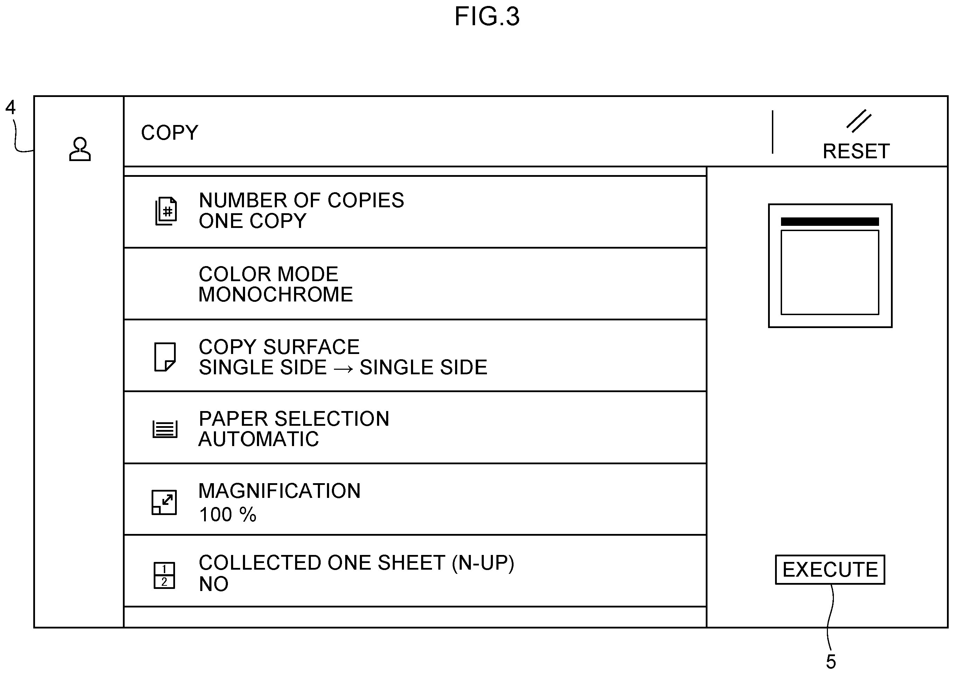

Fig. 3 is a diagram illustrating an example of the setting screen 4 displayed in a case in which the user presses a copy button in the menu button 3, for example.

The setting screen 4 is a screen for setting information for each setting item. The setting items related to the copy function include, for example, the number of copies, a color mode for designating a color of a copied image, a copy surface for designating a surface of a recording medium on which copying is executed, paper selection for selecting paper for copying, a magnification for setting a ratio of expansion or contraction of copy, and an N-up for designating the number of pages to be collectively copied in one page.

A default setting value is preset in each setting item by the image forming apparatus 2. Through the setting screen 4, the user changes the setting information in the setting item required to be changed in order to execute copying in accordance with a user's own desire from the default setting value to a desired value. Accordingly, setting information is set for each setting item of the copy function. An initial value in factory shipment may be a default setting value, or a user may operate the input unit 21 to set the default setting value.

When the user presses the execution button 5 to perform an execution operation of the copy function, the image forming apparatus 2 executes copying in accordance with setting information set for each setting item of the copy function. Whenever the copy function is executed, the image forming apparatus 2 generates history information including, for example, an execution date and time, identification information for identifying an executing user, and setting information set for each setting item, and stores the generated history information in the nonvolatile memory 14.

Here, the generation of the setting screen 4 and the history information in a case in which the copy function is selected has been described as an example. However, even in a case in which the user selects a function other than the copy function, the image forming apparatus 2 displays the setting screen 4 corresponding to each selected function on the display unit 22 and receives the setting of the setting information for each setting item. Even in a case in which the user selects a function other than the copy function, the image forming apparatus 2 generates history information whenever the function is executed, and stores the generated history information in the nonvolatile memory 14.

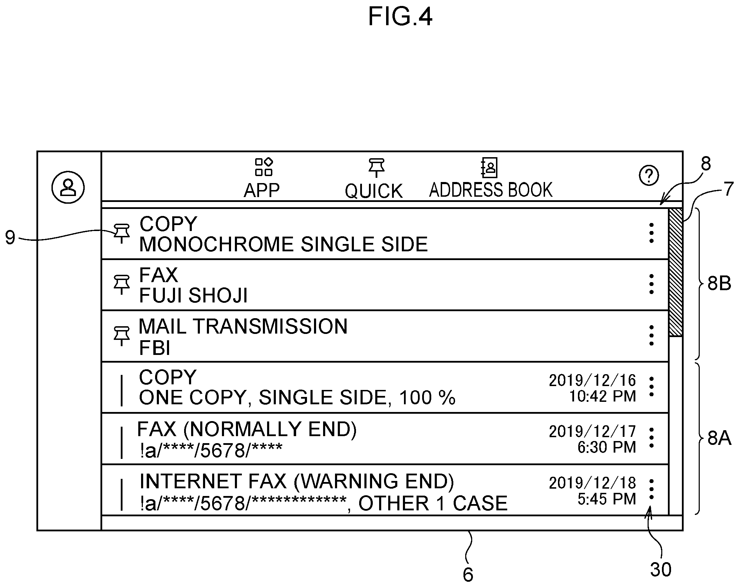

Fig. 4 is a view illustrating an example of history screen 6 on which the history information stored in nonvolatile memory 14 is displayed. Fig. 4 is displayed, for example, when the user presses a "Quick" button displayed on the upper side of Fig. 2. In the example of the history screen 6 illustrated in Fig. 4, since the executed functions are displayed in chronological order, the history information of the different functions is displayed in a mixed manner on the same screen. However, it is also possible to display only the history information of the function designated by the user in chronological order on the history screen 6. When an "App" button displayed on the upper side of Fig. 4 is pressed, the menu screen 1 illustrated in Fig. 2 is displayed.

A history button 8A associated with each piece of history information, and a save button 8B that is history button 8A pinned by the user are displayed on the history screen 6.

When the user presses the history button 8A or the save button 8B, the image forming apparatus 2 sets the setting information of the function associated with the pressed history button 8A or save button 8B to each setting item, and then executes the function associated with the pressed history button 8A or save button 8B. That is, the user can press the history button 8A or the save button 8B to execute the same function in accordance with the same setting information as the setting information previously set by the user without setting the setting information for each setting item on the setting screen 4. At this time, the function may be executed without transition to the setting screen 4 after pressing the history button 8A or the save button 8B, or the function may be executed by transition to the setting screen 4 after pressing the history button 8A or the save button 8B and pressing the execution button 5.

There is an upper limit to the number of history buttons 8A displayed on the history screen 6. Therefore, in a case in which the function is executed in the image forming apparatus 2, the history information stored in the nonvolatile memory 14 increases, and the number of history buttons 8A associated with the history information reaches the upper limit, the history buttons 8A associated with the older history information disappear from the history screen 6 in sequence. When the history button 8A associated with the history information including the setting information of which a use frequency is higher than the other setting information disappears from the history screen 6, the user has to reset the same setting information as the setting information set for the history button 8A that the user considers to press again from the setting screen 4, and thus it takes time and effort.

Accordingly, the image forming apparatus 2 normally displays the history button 8A instructed by the user on the history screen 6 regardless of the number of pieces of history information stored in the nonvolatile memory 14. In this way, an operation of preventing the operator for executing the function associated with the preset setting information from being erased is referred to as "pinning".

For example, the history button 8A is pinned from a setting menu displayed in a case in which the menu icon 30 provided for each history button 8A is pressed. When the pinning is executed, for example, like the save button 8B on the history screen 6 in Fig. 4, a save icon 9 with a pin shape is displayed on the save button 8B.

Conversely, the pinning can be released from the setting menu displayed in a case in which the menu icon 30 of the save button 8B is pressed. The save button 8B of which the pinning has been released operates as the history button 8A. As the history button 8A, the save button 8B of which the pinning has been released may be arranged in a chronological order on the history screen 6 based on a time executed similarly to the other history buttons 8A, or may be arranged in a chronological order on the history screen 6 based on a released time to be displayed above the other history buttons 8A. The save button 8B of which the pinning has been released may not be displayed as the history button 8A.

The image forming apparatus 2 also receives a pinning operation from the user on a screen other than the history screen 6. For example, the user can pin the setting information set on the setting screen 4. That is, not only the setting information set to the executed function but also the setting information set to the function to be executed can be pinned. In a case in which the user executes the pinning on the setting screen 4, a combination of the function selected on the menu screen 1 and the pinned setting information is displayed on, for example, the history screen 6.

As described above, the history button 8A and the save button 8B for executing the function associated with the menu button 3 are examples of the second operator. The history button 8A associated with the history related to the setting of the setting information is an example of a history operator, and the save button 8B generated in association with the setting information repeatedly used by the user is an example of a save operator. Hereinafter, in a case in which it is not necessary to distinguish the history button 8A from the save button 8B in description, both the history button 8A and the save button 8B are buttons for executing the associated function without setting the setting information again for each setting item, and thus the history button 8A and the save button 8B may be referred to as "shortcut button 8". That is, the shortcut button 8 is an example of the second operator that executes a function associated with the first operator.

In order for the user to easily confirm the setting information associated with the shortcut button 8, the image forming apparatus 2 displays the associated setting information in association with the shortcut button 8. Specifically, for example, for the history button 8A associated with the history information of the copy function in which the number of copies is set to one copy, the color mode is monochrome, the copy surface is single side, and a copy magnification is set to 100%, the image forming apparatus 2 displays setting information such as "1 copy, Monochrome, Single side, and 100%", as illustrated in Fig. 4. The image forming apparatus 2 may display the setting information and the name of the setting item indicated by the setting information in association with each other on the shortcut button 8, for example, "Number of pieces = 1 copy, Color mode = monochrome, Copy surface = single side, and Magnification = 100%".

Similarly, the image forming apparatus 2 may also display setting information associated with the save button 8B.

As the setting information is displayed on the shortcut button 8 in this way, the user can easily select the shortcut button 8 in which the setting information in accordance with the user's own desire is set, as compared with a case in which the setting information is not displayed on the shortcut button 8.

Next, a display process of displaying the setting information for each setting item associated with the shortcut button 8 in association with the shortcut button 8 will be described.

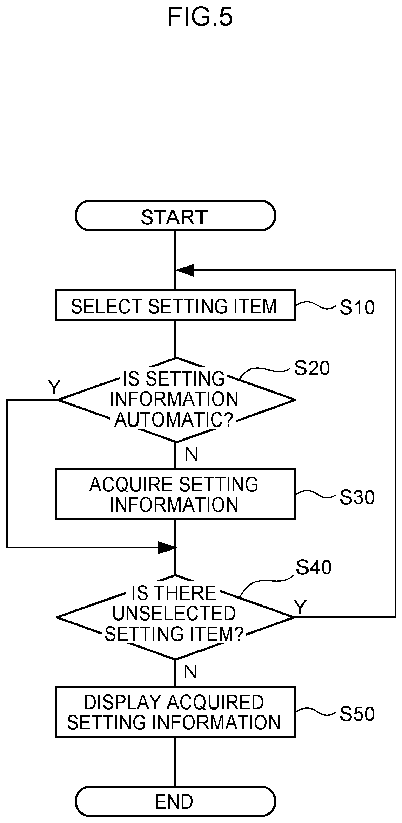

Fig. 5 is a flowchart illustrating an example of a display process executed by the CPU 11 of the image forming apparatus 2, for example, in a case in which the history screen 6 is displayed on the display unit 22.

An information processing program defining the display process is stored in advance in, for example, the ROM 12 of the image forming apparatus 2. The CPU 11 of the image forming apparatus 2 reads the information processing program stored in the ROM 12 and executes the display process.

Here, an example in which the setting information is displayed on the shortcut button 8 corresponding to one piece of history information will be described. When a plurality of pieces of history information are stored in the nonvolatile memory 14, the flowchart illustrated in Fig. 5 may be executed for each piece of history information.

First, in step S10, the CPU 11 selects any one setting item from the history information.

In step S20, the CPU 11 determines whether or not a value of the setting information is automatically set with reference to the setting information of the setting item selected in step S10. In a case in which the value of the setting information is set to a value other than an automatic value, the process proceeds to step S30.

In step S30, the CPU 11 acquires the setting information of the setting item selected in step S10 from the history information and stores the setting information in the RAM 13.

Conversely, in a case in which the value of the setting information of the setting item selected in step S10 is set to be automatic in the determination process of step S20, the process proceeds to step S40 without executing the process of step S30. That is, the setting information of which the value is automatically set is not acquired from the history information.

When the value of the setting information is automatic, the user entrusts the value of the setting information in the setting item selected in step S10 to the CPU 11. That is, since the value is not intentionally set from the viewpoint of the user, any value may be set as the setting information. In other words, it is not necessary for the user to confirm the setting information of which the value is automatically set. Therefore, the CPU 11 does not acquire the setting information of which the value is automatically set from the history information. The term "automatic" mentioned herein means that the value is not a value intentionally set by the user. Therefore, the display may have another name as long as the value indicates the same meaning. For example, a value of "AUTO" may be used.

In step S40, the CPU 11 determines whether or not there is still an unselected setting item which has not been selected in step S10 in the history information. In a case in which there is an unselected setting item, the process proceeds to step S10. In step S10, any one setting item is selected from the unselected setting items. By repeatedly executing steps S10 to S40 until it is determined in the determination process of step S40 that there is no unselected setting item, setting information of which the value is set to a value other than the automatic value is acquired from the history information.

In step S50, when the shortcut button 8 corresponding to the history information is displayed on the history screen 6, the CPU 11 displays the setting information (hereinafter simply referred to as "setting information") acquired in step S30 on the shortcut button 8, and ends the display process.

Accordingly, the setting information of which the value is automatically set is not displayed on the shortcut button 8. Even if the setting information is determined not to be displayed on the shortcut button 8 because the condition that the value is automatically set is satisfied, the CPU 11 may display the setting information on the shortcut button 8 as long as the setting information is the setting information of the setting item previously designated by the user as setting information that needs to be displayed.

Here, the example in which the setting information is displayed in the shortcut button 8 has been described as the display form in which the setting information is displayed in association with the shortcut button 8, but any display form may be used as long as association between the setting information and the shortcut button 8 is recognized by the user. For example, the CPU 11 may display a pop-up screen and display setting information on the pop-up screen when the user presses the shortcut button 8 for a long time. In the case of the selection method in which the touch panel is not superimposed and attached to the display unit 22 and the user selects the shortcut button 8 below a cursor by the selection button while moving the cursor, the CPU 11 may display a pop-up screen at a timing at which the cursor moves onto the shortcut button 8 and display the setting information on the pop-up screen. In this case, the CPU 11 erases the pop-up screen at a timing at which the cursor is separated from the shortcut button 8.

Through the display process illustrated in Fig. 5, not all the setting information included in the history information associated with the shortcut button 8 is displayed in association with the shortcut button 8, but the setting information of which the value is automatically set is not displayed in association with the shortcut button 8. Accordingly, in a case in which the user selects the shortcut button 8 for executing a function to be executed with the desired setting information, the number of pieces of setting information to be confirmed is inhibited as compared with a case in which all the setting information is displayed in association with the shortcut button 8. Therefore, a time required to select the aimed shortcut button 8 from the plurality of shortcut buttons 8 is shortened.

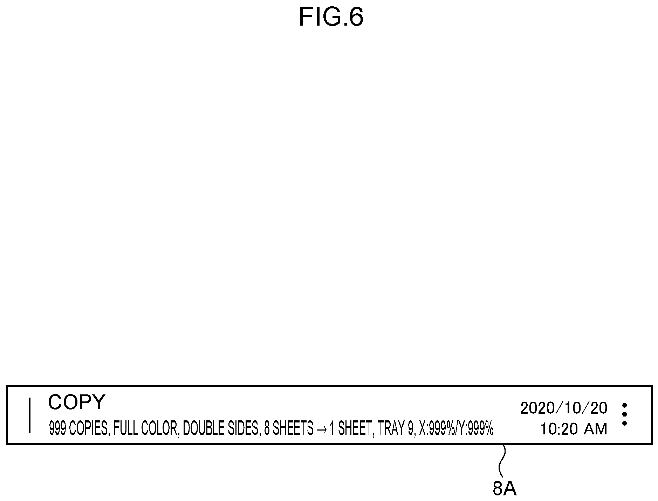

Fig. 6 is a diagram illustrating a display example of the setting information in the history button 8A displayed in the display unit 22 with a screen size of 10 inches. In the example of Fig. 6, all the setting information is fitted and displayed within the history button 8A, but the size of the shortcut button 8 such as the history button 8A changes in accordance with the screen size of the display unit 22.

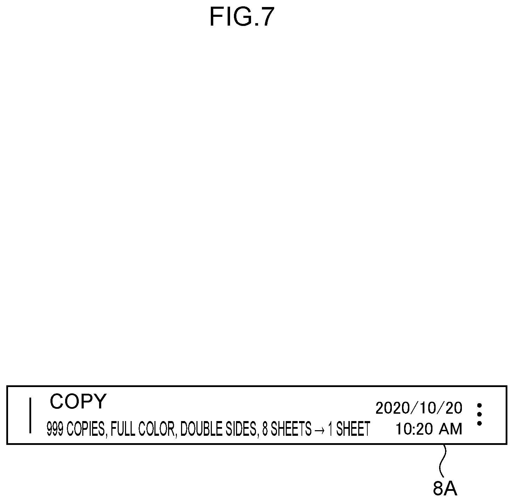

Fig. 7 is a diagram illustrating a display example of the setting information in the history button 8A displayed on the display unit 22 with a screen size of 5 inches. When the screen size of the display unit 22 becomes small and all the setting information cannot be displayed on the shortcut button 8, the CPU 11 displays a specific symbol such as "..." for notifying the user that there is setting information that cannot be displayed, at the end of the setting information displayed on the shortcut button 8.

When the user performs a scroll operation on the shortcut button 8 on which the specific symbol is displayed, the CPU 11 displays the setting information that cannot be displayed on the shortcut button 8.

As in the history screen 6 illustrated in Fig. 4, in a case in which the plurality of shortcut buttons 8 are arranged and displayed on the display unit 22 in a state in which the setting information associated with each shortcut button 8 can be simultaneously viewed, the CPU 11 may integrally scroll all the shortcut buttons 8 displayed on the display unit 22 in conjunction with the received scroll operation in the case of reception of an operation of scrolling the scroll bar 7 at the right end of the history screen 6. Accordingly, it is not necessary for the user to select which list is scrolled between the list of the history buttons 8A and the list of the save buttons 8B.

For example, of the shortcut buttons 8, only the history button 8A may be scrolled without changing the display position of the save button 8B. Alternatively, of the shortcut buttons 8, the display position of the uppermost shortcut button 8 may not be changed, and only the other shortcut buttons 8 may be scrolled. Accordingly, even in a case in which the shortcut button 8 is scrolled, the shortcut button 8 considered to have a high priority can be left on the history screen 6.

A state in which the plurality of shortcut buttons 8 are arranged so that the setting information associated with each of the shortcut buttons 8 can be simultaneously viewed without overlapping is referred to as a state in which the shortcut buttons 8 are arranged in parallel.

In a case in which the CPU 11 displays the setting information in association with the shortcut button 8, the user may determine the display order of the setting information in accordance with the preset priority. The CPU 11 displays the setting information of the setting items with high priorities in order in association with the shortcut button 8. By displaying the setting information in this way, even if the user does not scroll the shortcut button 8, a probability of the setting information being displayed on the shortcut button 8 from the beginning of display of the shortcut button 8 increases as the setting information of the setting item has a higher priority.

In a case in which the setting information is displayed on a pop-up screen, the "shortcut button 8" in the above description of the scroll displaying of the setting information may be replaced with a "pop-up screen".

In the display process illustrated in Fig. 5, the setting information of which the value is set automatically is not displayed in association with the shortcut button 8. However, even the setting information of which the value is set to a value other than the automatic value includes setting information which it is not necessary for the user to confirm in some cases. Accordingly, the user may designate in advance the setting item for which it is not necessary to display the setting information, and the CPU 11 needs not display the setting information of the setting item which is designated to be unnecessary to display in association with the shortcut button 8.

In this case, the CPU 11 may receive a designation of not displaying the setting information of all the setting items that can be set for a function to be executed. However, in a case in which a display target of the setting information is the history button 8A, it cannot be determined which setting information is associated with the history button 8A. Accordingly, in a case in which the display target of the setting information is the history button 8A, the CPU 11 preferably displays at least one of the setting information of which the value is set to a value other than an automatic value in association with the history button 8A. For example, regardless of the designation of the setting information that does not need to be displayed, the CPU 11 may display only the setting information of a predetermined number of setting items in association with the history button 8A in descending order of priorities.

On the other hand, in a case in which the display target of the setting information is the save button 8B, the save button 8B is intentionally generated for the purpose of repeated pressing by the user. Therefore, it may be determined where the save button 8B with which setting information is associated is located even if the setting information is not displayed. Accordingly, when a display target of the setting information is the save button 8B, the CPU 11 needs not display all the setting information included in the corresponding history information in association with the save button 8B, including the setting information of which the value is automatically set.

Even in a case in which the setting information is displayed in association with the save button 8B, the number of pieces of setting information displayed in association with the save button 8B may be less than the number of pieces of setting information displayed in association with the history button 8A because of the above-described reason. Accordingly, CPU 11 may control the number of pieces of setting information to be displayed on display unit 22 such that the number of pieces of setting information to be displayed in association with the save button 8B is less than the number of pieces of setting information to be displayed in association with history button 8A.

As described above, even in the save button 8B, the setting information included in the corresponding history information may be displayed in association with each other. However, in the save button 8B associated with the setting information repeatedly used by the user, it is preferable to display not a list of the setting information but a characteristic name (hereinafter referred to as a "specific name") such as a scene in which a function is executed or a communication partner using the setting information associated with the save button 8B in association. For example, in the save button 8B on the history screen 6 illustrated in Fig. 4, among a plurality of pieces of setting information related to the copy function, "single side monochrome" indicating that the color mode is monochrome and the copy surface is set on one side in a highlighted manner, "Fuji Shoji" indicating a transmission party of Fax, and "FBI" indicating a transmission party of an image of a document read by the scanner function correspond to a specific name.

The specific name can be set from a setting menu displayed in a case in which the menu icon 30 provided in each save button 8B is pressed. The setting of the specific name includes, for example, a setting for displaying only the specific name and a setting for displaying the specific name and the setting information together. That is, the save button 8B has a display form in which only the specific name is displayed in association, a display form in which only the setting information is displayed in association, and a display form in which both the specific name and the setting information are displayed in association.

In the display process illustrated in Fig. 5, the setting information of which the value is automatically set is not displayed in association with the shortcut button 8, and the number of pieces of setting information to be confirmed in a case in which the user selects the shortcut button 8 is suppressed. However, various modified examples are conceivable with regard to inhibition of the number of pieces of setting information to be confirmed by the user.

For example, the CPU 11 may acquire only the setting information considered to be necessary for the user among the pieces of setting information included in the history information and display the setting information in association with the shortcut button 8 corresponding to the history information. For example, in a case in which billing is executed with execution of a function, the CPU 11 acquires only the setting information of the setting item related to billing from the history information and displays the setting information in association with the shortcut button 8 corresponding to the history information. The setting items related to billing are specified by the user, for example.

The CPU 11 needs not display the setting information indicating that an operation defined by the setting item is not executed among the pieces of setting information included in the history information in association with the shortcut button 8 corresponding to the history information. The setting information regarding an operation that is not executed is setting information that does not cause a problem even if the setting information is not displayed for the user. For example, when "No N-up" is set as the setting information for an N-up setting item in the copy function, the CPU 11 does not display the setting information of "No N-up" in association with the shortcut button 8 corresponding to the history information.

Furthermore, in order to shorten a time required for the user to confirm the setting information, the CPU 11 may edit a notation of the setting information as short as possible within a range in which the user can understand the meaning, and then display the notation in association with the shortcut button 8. For example, when "Single side → Double sides" for designating copying of one side of a document serving as a copy source to both sides of a recording medium serving as a copy destination is set as setting information of a setting item for setting a copy side, the CPU 11 may extract only "Double sides" indicating an output mode of an image from the setting information and display the extracted information in association with the shortcut button 8. As the setting information of the setting item for setting the copy surface, in a case in which "2 sheets → 1 sheet (2 up): right → left " is set to designate that, when two documents which is a copy source are aggregated and copied on one recording medium which is a copy destination, a document of the first page which is a copy source is arranged on the right of the recording medium and a document of the second page which is a copy source is arranged on the left of the recording medium, the CPU 11 may extract only a portion of "2 sheets → 1 sheet" indicating a main operation from the setting information and display the portion in association with the shortcut button 8, among the operations executed by the image forming apparatus 2.

The CPU 11 may sequentially display the setting information included in the history information on the shortcut button 8 without shortening the notation of the setting information. In a case in which the setting information in which the entire notation does not fit in the shortcut button 8 appears in the size relationship of the shortcut button 8, the portion of the notation of the setting information that does not fit in the shortcut button 8 may be omitted, that is, cut off and displayed. That is, the CPU 11 may sequentially display the setting information on the shortcut button 8 until the setting information included in the history information can be displayed, and may omit the ending of the setting information that is cut off during the display.

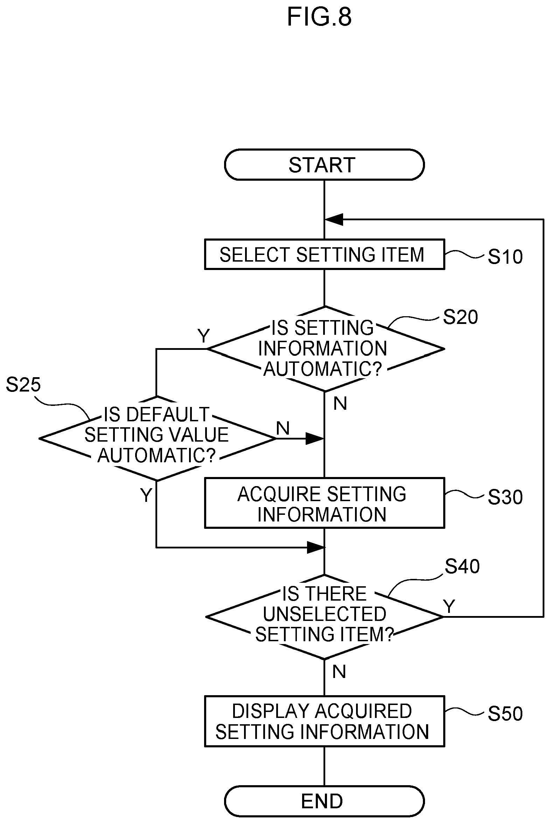

On the other hand, Fig. 8 is a flowchart illustrating a modified example of the display process executed by the CPU 11 of the image forming apparatus 2, for example, in a case in which the history screen 6 is displayed on the display unit 22.

The display process illustrated in Fig. 8 is different from the display process illustrated in Fig. 5 in that step S25 is added, and the other processes are the same as the display process illustrated in Fig. 5. Accordingly, the display process illustrated in Fig. 8 will be described below focusing on the process of step S25.

In the determination process of step S20 of Fig. 8, the process proceeds to step S25 in a case in which the value of the setting information of the setting item selected in step S10 is automatically set.

In step S25, the CPU 11 determines whether or not the default setting value of the setting item for which the value of the setting information is automatically set is automatic.

When the default setting value of the setting item for which the value of the setting information is automatically set is not automatic, the user intentionally sets the value of the setting information automatically. That is, the automatic setting in this case is a meaningful setting for the user. In a case in which the user selects the aimed shortcut button 8 from the history screen 6, the user tends to confirm whether or not the value is automatic with respect to the setting information in which the value is intentionally set automatically.

Accordingly, in a case in which the value of the default setting value of the setting item for which the value of the setting information is automatically set is not automatic, the process proceeds to step S30. Accordingly, even in a case in which it is determined in the determination process of step S20 that the value of the setting information is set automatically, the setting information of which the value is set automatically is acquired from the history information, and the setting information of which the value is set automatically is displayed in association with the shortcut button 8 corresponding to the history information.

Conversely, in a case in which the default setting value of the setting item for which the value of the setting information is set to automatic is automatic, even if the value of the setting information is automatic as a result, this automatic setting is not a value intentionally set by the user. That is, the automatic setting in this case is a meaningless setting for the user. In a case in which the user selects the aimed shortcut button 8 from the history screen 6, the user tends not to confirm whether or not the value is automatic for the setting information for which the value is not intentionally set automatically.

Accordingly, in a case in which the default setting value of the setting item for which the value of the setting information is automatically set is automatic, the process proceeds to step S40 without executing the process of step S30. Accordingly, the setting information in which the value is automatically set and the default setting value is automatic is not displayed in association with the shortcut button 8 corresponding to the history information.

Even if it is determined that the setting information is not displayed in association with the shortcut button 8 because of satisfaction of the condition that the value is set automatically and the default setting value is automatic, the CPU 11 may display the setting information on the shortcut button 8 as long as the setting information is the setting information of the setting item designated in advance by the user as the setting information required to be displayed.

Although one aspect of the information processing apparatus has been described above using the embodiment, the disclosed form of the information processing apparatus is exemplary, and a form of the information processing apparatus is not limited to the scope described in the embodiment. Various modifications or improvements of the embodiments can be made without departing from the gist of the present disclosure, and the modified or improved embodiments are also included in the technical scope of the disclosure. For example, the orders of the display processes illustrated in Figs. 5 and 8 may be changed without departing from the gist of the present disclosure.

In the above embodiment, as an example, the form in which the display process is implemented by software has been described. However, processes equivalent to those in the flowcharts illustrated in Figs. 5 and 8 may be performed by hardware. In this case, a process speed can be increased as compared with a case in which the display process is implemented by software.

In the above embodiment, a processor is a processor in a broad sense, and includes a general-purpose processor (for example, a central processing unit (CPU) 11 or the like) or a dedicated processor (for example, a graphics processing unit (GPU), an application specific integrated circuit (ASIC), a field programmable gate array (FPGA), a programmable logic device, and the like).

In addition, the operation of the processor in the above-described embodiment may be executed not only by one processor but also by cooperation of a plurality of processors existing at physically separated positions. The order of operations of the processor is not limited to the order described in each of the above-described embodiments, and may be appropriately changed.

In the above embodiment, the example in which the information processing program is stored in the ROM 12 has been described, but a storage destination of the information processing program is not limited to the ROM 12. The information processing program according to the present disclosure can also be provided in a form recorded in a storage medium which can be read by the computer 10. For example, the information processing program may be provided in a form of being recorded on an optical disk such as a compact disk read only memory (CD-ROM) and a digital versatile disk read only memory (DVD-ROM). The information processing program may be provided in a form of being recorded in a portable semiconductor memory such as a universal serial bus (USB) memory and a memory card. The ROM 12, the nonvolatile memory 14, the CD-ROM, the DVD-ROM, the USB, and the memory card are examples of a non-transitory storage medium.

Further, the image forming apparatus 2 which is an example of an information processing apparatus may download an information processing program from an external device through the communication unit 20 and store the downloaded information processing program in a storage device. In this case, the CPU 11 of the image forming apparatus 2 reads the information processing program downloaded from an external device and executes a display process.

## Claims

1. An information processing apparatus (2) comprising a processor (11),
wherein the processor (11) is configured to display a first operator (3) for allowing a user to select a function to be executed on a display device (22), and display a setting screen (4) for receiving setting information for each setting item for setting an operation of a function associated with the first operator (3) selected by the user on the display device (22),
**characterized in that**
the processor is configured to determine whether a value of the setting information of each setting item that in stored history information is automatically set and if so, not to acquire the setting information from the stored history information and not to display the setting information, but if not, to acquire the setting information from the stored history information and display the acquired setting information for confirmation by the user, in a case in which a second operator (8) for executing the function associated with the first operator (3) is displayed on the display device (22) in accordance with the setting information set through the setting screen (4),
wherein the value that is automatically set in association with the second operator (8) indicates a value which is not intentionally set by the user and which does not need to be acquired from the history information for confirmation by the user.

2. The information processing apparatus (2) according to claim 1,
wherein the processor (11) does not display the setting information of which a default setting value is automatically set among the pieces of setting information of which the value is set automatically on the display device (22) in association with the second operator (8).

3. The information processing apparatus (2) according to claim 1,
wherein the processor (11) does not display the setting information of which the value is set automatically on the display device (22) in association with the second operator (8), regardless of whether or not a default setting value of the setting information is automatic.

4. The information processing apparatus (2) according to claim 2 or 3,
wherein the processor (11) displays the setting information of the setting item designated in advance by the user on the display device (22) in association with the second operator (8), even if the setting information satisfies a condition that display is not executed in association with the second operator (8).

5. The information processing apparatus (2) according to any one of claims 1 to 4,
wherein at least one of a history operator generated when an instruction to execute the function associated with the first operator (3) is received from the user in the setting information and a save operator generated as the setting information repeatedly used by the user is included as the second operator (8).

6. The information processing apparatus (2) according to claim 5,
wherein the processor (11) includes and displays at least one of the pieces of setting information of which the value is set to a value which is not automatic in the history operator.

7. The information processing apparatus (2) according to claim 6,
wherein the processor (11) controls the number of pieces of the setting information to be displayed on the display device (22) such that the number of pieces of the setting information to be displayed in association with the save operator is smaller than the number of pieces of the setting information to be displayed in association with the history operator.

8. The information processing apparatus (2) according to claim 7,
wherein the processor (11) does not display the setting information on the display device (22) in association with the save operator.

9. The information processing apparatus (2) according to claim 7 or 8,
wherein the processor (11) displays the history operator and the save operator on the same screen.

10. The information processing apparatus (2) according to claim 9,
wherein the processor (11) displays the history operator and the save operator in parallel and displays the history operator and the save operator such that the history operator and the save operator are scrolled simultaneously.

11. A computer-readable storage medium storing an information processing program causing a computer to execute:
displaying a first operator (3) for allowing a user to select a function to be executed on a display device (22), and displaying a setting screen (4) for receiving setting information for each setting item for setting an operation of a function associated with the first operator (3) selected by the user on the display device (22); and
**characterized by**
determining whether a value of the setting information of each setting item that in stored history information is automatically set and if so, not acquiring the setting information from the stored history information and not displaying the setting information, but if not, acquiring the setting information from the stored history information and displaying the acquired setting information for confirmation by the user, in a case in which a second operator (8) for executing the function associated with the first operator (3) is displayed on the display device (22) in accordance with the setting information set through the setting screen (4),
wherein the value that is automatically set in association with the second operator (8) indicates a value which is not intentionally set by the user and which does not need to be acquired from the history information for confirmation by the user.

## Patentansprüche

1. Informationsverarbeitungsvorrichtung (2) umfassend einen Prozessor (11),
wobei der Prozessor (11) so konfiguriert ist, dass er ein erstes Bedienelement (3), das es einem Benutzer ermöglicht, eine auszuführende Funktion auf einer Anzeigevorrichtung (22) auszuwählen, anzeigt, und dass er einen Einstellbildschirm (4) zum Empfangen von Einstellinformationen für jedes Einstellelement zur Einstellung eines Arbeitsablaufs einer Funktion, die mit dem vom Benutzer auf der Anzeigevorrichtung (22) ausgewählten ersten Bedienelement (3) verbunden ist, anzeigt,
**dadurch gekennzeichnet, dass**
der Prozessor konfiguriert ist, festzustellen, ob ein Wert der Einstellinformation jedes Einstellelements, der in gespeicherter Verlaufsinformation enthalten ist, automatisch eingestellt wird, und falls ja, die Einstellinformation nicht aus der gespeicherten Verlaufsinformation abzurufen und die Einstellinformation nicht anzuzeigen, jedoch falls nein, die Einstellinformation aus der gespeicherten Verlaufsinformation abzurufen und die abgerufene Einstellinformation zur Bestätigung durch den Benutzer anzuzeigen, in einem Fall, in dem ein zweites Bedienelement (8) zur Ausführung der mit dem ersten Bedienelement (3) verbundenen Funktion auf der Anzeigevorrichtung (22) gemäß der über den Einstellbildschirm (4) eingestellten Einstellinformation angezeigt wird,
wobei der Wert, der in Verbindung mit dem zweiten Bedienelement (8) automatisch eingestellt wird, einen Wert angibt, der nicht absichtlich vom Benutzer eingestellt wurde und der nicht aus der Verlaufsinformation zur Bestätigung durch den Benutzer abgerufen werden muss.

2. Informationsverarbeitungsvorrichtung (2) gemäß Anspruch 1,
wobei der Prozessor (11) die Einstellinformation, von der ein vorgegebener Einstellwert automatisch eingestellt wird, nicht zwischen den Einstellinformationen deren Wert automatisch in Verbindung mit dem zweiten Bedienelement (8) auf der Anzeigevorrichtung (22) eingestellt wird anzeigt.

3. Informationsverarbeitungsvorrichtung (2) gemäß Anspruch 1,
wobei der Prozessor (11) die Einstellinformation, deren Wert in Verbindung mit dem zweiten Bedienelement (8) automatisch auf der Anzeigevorrichtung (22) eingestellt wird, nicht anzeigt, unabhängig davon, ob ein vorgegebener Einstellwert der Einstellinformation automatisch ist oder nicht.

4. Informationsverarbeitungsvorrichtung (2) gemäß Anspruch 2 oder 3,
wobei der Prozessor (11) die Einstellinformation des vom Benutzer im Voraus in Verbindung mit dem zweiten Bedienelement (8) auf der Anzeigevorrichtung (22) eingestellten Einstellelements anzeigt, selbst wenn die Einstellinformation eine Bedingung erfüllt, wonach die Anzeige nicht in Verbindung mit dem zweiten Bedienelement (8) ausgeführt wird.

5. Informationsverarbeitungsvorrichtung (2) gemäß einem der Ansprüche 1 bis 4,
wobei mindestens einer von einem Verlaufsbedienelement, das erzeugt wird, wenn ein Befehl zur Ausführung der mit dem ersten Bedienelement (3) verbundenen Funktion vom Benutzer in der Einstellinformation empfangen wird, und einem Speicherbedienelement, das als die vom Benutzer wiederholt verwendete Einstellinformation erzeugt wird, als zweites Bedienelement (8) enthalten sind.

6. Informationsverarbeitungsvorrichtung (2) gemäß Anspruch 5,
wobei der Prozessor (11) mindestens eine von den Einstellinformationen, deren Wert auf einen Wert eingestellt ist, der nicht automatisch ist, im Verlaufsbedienelement einbezieht und anzeigt.

7. Informationsverarbeitungsvorrichtung (2) gemäß Anspruch 6,
wobei der Prozessor (11) die Anzahl der auf der Anzeigevorrichtung (22) anzuzeigenden Einstellinformationen so steuert, dass die Anzahl der in Verbindung mit dem Speicherbedienelement anzuzeigenden Einstellinformationen kleiner ist als die Anzahl der in Verbindung mit dem Verlaufsbedienelement anzuzeigenden Einstellinformationen.

8. Informationsverarbeitungsvorrichtung (2) gemäß Anspruch 7,
wobei der Prozessor (11) die Einstellinformation nicht in Verbindung mit dem Speicherbedienelement auf der Anzeigevorrichtung (22) anzeigt.

9. Informationsverarbeitungsvorrichtung (2) gemäß Anspruch 7 oder 8,
wobei der Prozessor (11) das Verlaufsbedienelement und das Speicherbedienelement auf demselben Bildschirm anzeigt.

10. Informationsverarbeitungsvorrichtung (2) gemäß Anspruch 9,
wobei der Prozessor (11) das Verlaufsbedienelement und das Speicherbedienelement parallel anzeigt und das Verlaufsbedienelement und das Speicherbedienelement so anzeigt, dass das Verlaufsbedienelement und das Speicherbedienelement gleichzeitig gescrollt werden.

11. Computerlesbares Speichermedium, das ein Informationsverarbeitungsprogramm speichert, das einen Computer veranlasst, Folgendes auszuführen:
Anzeigen eines ersten Bedienelements (3), das es einem Benutzer ermöglicht, eine auszuführende Funktion auf einer Anzeigevorrichtung (22) auszuwählen, und Anzeigen eines Einstellbildschirms (4) zum Empfangen von Einstellinformationen für jedes Einstellelement zur Einstellung eines Arbeitsablaufs einer Funktion, die mit dem vom Benutzer auf der Anzeigevorrichtung (22) ausgewählten ersten Bedienelement (3) verbunden ist; und
**gekennzeichnet durch**
Feststellen, ob ein Wert der Einstellinformation jedes Einstellelements, der in gespeicherter Verlaufsinformation enthalten ist, automatisch eingestellt wird, und falls ja, Nicht-Abrufen der Einstellinformation aus der gespeicherten Verlaufsinformation und Nicht-Anzeigen der Einstellinformation, jedoch falls nein, Abrufen der Einstellinformation aus der gespeicherten Verlaufsinformation und Anzeigen der abgerufenen Einstellinformation zur Bestätigung durch den Benutzer, in einem Fall, in dem ein zweites Bedienelement (8) zur Ausführung der mit dem ersten Bedienelement (3) verbundenen Funktion auf der Anzeigevorrichtung (22) gemäß der über den Einstellbildschirm (4) eingestellten Einstellinformation angezeigt wird,
wobei der Wert, der in Verbindung mit dem zweiten Bedienelement (8) automatisch eingestellt wird, einen Wert angibt, der nicht absichtlich vom Benutzer eingestellt wurde und der nicht aus den Verlaufsinformationen zur Bestätigung durch den Benutzer abgerufen werden muss.

## Revendications

1. Appareil de traitement d'informations (2) comprenant un processeur (11),
dans lequel le processeur (11) est configuré pour afficher un premier opérateur (3) permettant à un utilisateur de sélectionner une fonction à exécuter sur un dispositif d'affichage (22), et pour afficher un écran de réglage (4) destiné à recevoir des informations de réglage pour chaque élément de réglage afin de régler un fonctionnement d'une fonction associée au premier opérateur (3) sélectionné par l'utilisateur sur le dispositif d'affichage (22),
**caractérisé en ce que**
le processeur est configuré pour déterminer si une valeur des informations de réglage de chaque élément de réglage figurant dans des informations d'historique stockées est automatiquement réglée et, si c'est le cas, pour ne pas acquérir les informations de réglage à partir des informations d'historique stockées et ne pas afficher les informations de réglage, mais, si ce n'est pas le cas, pour acquérir les informations de réglage à partir des informations d'historique stockées et afficher les informations de réglage acquises pour confirmation par l'utilisateur, dans le cas où un deuxième opérateur (8) pour exécuter la fonction associée au premier opérateur (3) est affiché sur le dispositif d'affichage (22) selon les informations de réglage réglées via l'écran de réglage (4),
dans lequel la valeur qui est automatiquement réglée en association avec le deuxième opérateur (8) indique une valeur qui n'est pas réglée intentionnellement par l'utilisateur et qui n'a pas besoin d'être acquise à partir des informations d'historique pour confirmation par l'utilisateur.

2. Appareil de traitement d'informations (2) selon la revendication 1,
dans lequel le processeur (11) n'affiche pas sur le dispositif d'affichage (22), en association avec le deuxième opérateur (8), les informations de réglage dont une valeur de réglage par défaut est réglée automatiquement parmi les informations de réglage dont la valeur est réglée automatiquement.

3. Appareil de traitement d'informations (2) selon la revendication 1,
dans lequel le processeur (11) n'affiche pas sur le dispositif d'affichage (22) les informations de réglage dont la valeur est réglée automatiquement en association avec le deuxième opérateur (8), qu'une valeur de réglage par défaut des informations de réglage soit automatique ou non.

4. Appareil de traitement d'informations (2) selon la revendication 2 ou 3,
dans lequel le processeur (11) affiche les informations de réglage de l'élément de réglage désigné à l'avance par l'utilisateur sur le dispositif d'affichage (22) en association avec le deuxième opérateur (8), même si les informations de réglage satisfont à une condition selon laquelle l'affichage n'est pas exécuté en association avec le deuxième opérateur (8).

5. Appareil de traitement d'informations (2) selon l'une quelconque des revendications 1 à 4,
dans lequel au moins l'un parmi un opérateur d'historique généré lorsqu'une instruction d'exécution de la fonction associée au premier opérateur (3) est reçue de l'utilisateur dans les informations de réglage et un opérateur d'enregistrement généré lorsque les informations de réglage sont utilisées de manière répétée par l'utilisateur est inclus en tant que deuxième opérateur (8).

6. Appareil de traitement d'informations (2) selon la revendication 5,
dans lequel le processeur (11) inclut et affiche au moins l'une des informations de réglage dont la valeur est réglée à une valeur qui n'est pas automatique dans l'opérateur d'historique.

7. Appareil de traitement d'informations (2) selon la revendication 6,
dans lequel le processeur (11) commande le nombre d'informations de réglage à afficher sur le dispositif d'affichage (22) de telle sorte que le nombre d'informations de réglage à afficher en association avec l'opérateur d'enregistrement soit inférieur au nombre d'informations de réglage à afficher en association avec l'opérateur d'historique.

8. Appareil de traitement d'informations (2) selon la revendication 7,
dans lequel le processeur (11) n'affiche pas les informations de configuration sur le dispositif d'affichage (22) en association avec l'opérateur d'enregistrement.

9. Appareil de traitement d'informations (2) selon la revendication 7 ou 8,
dans lequel le processeur (11) affiche l'opérateur d'historique et l'opérateur d'enregistrement sur le même écran.

10. Appareil de traitement d'informations (2) selon la revendication 9,
dans lequel le processeur (11) affiche l'opérateur d'historique et l'opérateur d'enregistrement en parallèle et affiche l'opérateur d'historique et l'opérateur d'enregistrement de telle sorte que l'opérateur d'historique et l'opérateur d'enregistrement défilent simultanément.

11. Support de stockage lisible par ordinateur stockant un programme de traitement d'informations amenant un ordinateur à exécuter les opérations consistant à :
afficher un premier opérateur (3) permettant à un utilisateur de sélectionner une fonction à exécuter sur un dispositif d'affichage (22), et afficher un écran de réglage (4) destiné à recevoir des informations de réglage pour chaque élément de réglage afin de régler le fonctionnement d'une fonction associée au premier opérateur (3) sélectionné par l'utilisateur sur le dispositif d'affichage (22) ; et
**caractérisé par** les opérations consistant à :
déterminer si une valeur des informations de réglage de chaque élément de réglage qui figure dans des informations d'historique stockées est automatiquement réglée et, si c'est le cas, ne pas acquérir les informations de réglage à partir des informations d'historique stockées et ne pas afficher les informations de réglage, mais, si ce n'est pas le cas, acquérir les informations de réglage à partir des informations d'historique stockées et afficher les informations de réglage acquises pour confirmation par l'utilisateur, dans le cas où un deuxième opérateur (8) pour exécuter la fonction associée au premier opérateur (3) est affiché sur le dispositif d'affichage (22) selon les informations de réglage réglées via l'écran de réglage (4),
dans lequel la valeur qui est automatiquement réglée en association avec le deuxième opérateur (8) indique une valeur qui n'est pas réglée intentionnellement par l'utilisateur et qui n'a pas besoin d'être acquise à partir des informations d'historique pour confirmation par l'utilisateur.
